# EUROPÄISCHE PATENTSCHRIFT

(11) **EP 1 184 647 B1**
(45) Veröffentlichungstag und Bekanntmachung des Hinweises auf die Patenterteilung: **09.07.2014**
(21) Anmeldenummer: 00810766.6
(22) Anmeldetag: 28.08.2000
(51) Int. Cl.: G01F 23/26

(54) **Verfahren und Vorrichtung zur kombinierten kapazitiven und induktiven Füllstandmessung**
Method and device for a combined inductive and capacitive level measurement
Procédé et dispositif pour la mesure combinée inductive et capacitive d'un niveau

(43) Veröffentlichungstag der Anmeldung: 06.03.2002
(73) Patentinhaber: Vetco Gray Scandinavia AS, 1302 Sandvika (NO)
(72) Erfinder: Matter, Daniel, Dr.,, 5200 Brugg (CH); Kleiner, Thomas, 5442 Fislisbach (CH); Hansson, Peder, 0281 Oslo (NO); Eriksson, Klas, 1387 Asker (NO)

(56) Entgegenhaltungen:
- WO-A-98/33044
- DE-A- 19 819 013
- US-A- 3 942 105
- US-A- 4 987 776
- US-A- 5 142 909
- US-A- 5 576 619

## Beschreibung

### TECHNISCHES GEBIET

Die vorliegende Erfindung bezieht sich auf das Gebiet der Füllstandsanzeigen. Sie geht aus von einem Verfahren und einer Vorrichtung zur Füllstandsmessung nach dem Oberbegriff der unabhängigen Ansprüche.

### STAND DER TECHNIK

Bei der Offshore-Erdölförderung werden Separationstanks eingesetzt, in welchen die bei der Bohrung auftretenden Phasen (Sand, Wasser, Öl und Gas) durch Segregation separiert und in getrennten Leitungssystemen abgeführt werden. Zur Steuerung der Auslassventile werden die Füllstände, insbesondere die Positionen der Grenzschichten zwischen Gas und Öl sowie zwischen Öl und Wasser, überwacht.

Neuerdings werden Hochdruck-Separationstanks entwickelt, die für den Betrieb auf dem Meeresboden einige 100 m unterhalb der Meeresoberfläche ausgelegt sind. Dadurch kann das Öl zuerst separiert und dann mit geringem Energieaufwand an die Meeresoberfläche gepumpt werden. Solche Separatortanks sind sehr hohen Drücken von 60 bar-180 bar und hohen Temperaturen von 50°C-120°C ausgesetzt. Ein Füllstandsmesssystem muss unter solchen schwierigen Bedingungen jahrelang wartungsfrei und zuverlässig funktionieren, um die Betriebssicherheit des Separatortanks zu gewährleisten.

Die WO 98/33044 offenbart einen kapazitiven Füllstandssensor, bei dem zwischen benachbarten Elektroden einer stabförmigen Sonde die umgebungsabhängige Kapazität gemessen wird. Grosse Messsignale an einer Wasser-Öl Grenzschicht werden dadurch erzielt, dass die Elektrodenhöhen und Elektrodenabstände im Hinblick auf füllstandsabhängige Änderungen der Dielektrizitätskonstanten und der elektrischen Leitfähigkeit optimiert werden. Es wird auch angegeben, wie aus einem kapazitiven Messsignal die Dicke eines leitfähigen Schmutzfilms bestimmbar ist und die Menge eines Inhibitorzusatzes zur chemischen Auflösung des Schmutzfilms regelbar ist. Ein Nachteil besteht in der beschränkten Genauigkeit bei der Ortsbestimmung der Grenzschicht Wasser-Öl und besonders einer Wasser-Öl Emulsionsschicht, da Kapazitätsänderungen in einem relativ weiträumigen Bereich um die Elektroden erfasst werden. Darüberhinaus können Füllstandshöhen in Bereichen zwischen den Elektroden nicht oder nur sehr unpräzise bestimmt werden.

Die Firma Endress+Hauser bietet eine induktive Leitfähigkeitsmesszelle CLS 51 für Messungen in Labor- und Produktionsanlagen an. Das Messprinzip beruht darauf, dass ein Ferritkern mit einer Primärspule in der Füllflüssigkeit einen Ionenwechselstrom erzeugt, der in einem zweiten benachbarten Ferritkern mit einer Sekundärspule ein magnetisches Wechselfeld induziert. Das induzierte Signal ist ein Mass für die Ionenleitfähigkeit und damit Beschaffenheit der Füllflüssigkeit. Das elektrodenlose induktive Messprinzip ist unempfindlich gegen Ablagerungen an den Ferritkernen und Spulen. Nachteilig ist jedoch, dass die Ortsauflösung für die Wasser-Öl Grenzschicht durch den Abstand der beiden Ferritkerne begrenzt ist und dass Gas-Öl Grenzschichten nicht detektierbar sind. Mit einem der bisherigen Sensoren ist es daher messtechnisch schwierig oder unmöglich, die Füllstände aller Phasen und dazischenliegender Mischphasen in einem Separatortank simultan zu überwachen.

### DARSTELLUNG DER ERFINDUNG

Die Erfindung stellt sich die Aufgabe, ein Verfahren und eine Vorrichtung zur Füllstandsmessung anzugeben, die sich durch eine verbesserte Genauigkeit der Grenzschichtdetektion bei verschiedenen Füllgütern auszeichnet. Diese Aufgabe wird erfindungsgemäss durch die Merkmale der unabhängigen Ansprüche gelöst.

Die Erfindung besteht in einem Verfahren zur Füllstandsmessung gemäß Anspruch 1, bei dem ein Kapazitätssensor eine stabförmige Sonde mit mehreren, entlang einer ersten Sondenachse angeordneten Elektroden umfasst und elektrische Kapazitätssignale zwischen den Elektroden gemessen werden, wobei zusätzlich mit mehreren, entlang einer zweiten Sondenachse angeordneten, elektrodenlosen induktiven Sensoren elektrische Induktionssignale gemessen werden und aus den Kapazitätssignalen und den Induktionssignalen ein gemeinsames Messsignal zur Bestimmung eines Füllstandsprofils im Behälter gebildet wird. Durch die Kombination ortsabhängiger Kapazitätsmessungen mit ortsabhängigen Induktionsmessungen können ein auf verschiedenste Grenzschichten empfindliches Messignal generiert werden und ein Füllstandsprofil mit verbesserter Ortsauflösung erstellt werden.

Ausführungsbeispiele betreffen: Bestimmen einer Position einer Grenzschicht zwischen Medien mit unterschiedlichen elektrischen Leitfähigkeiten aus den Induktionssignalen; Bestimmen einer Position und/oder Dicke einer Grenzschicht zwischen zwei Medien mit unterschiedlichen Dielektrizitätskonstanten und/oder unterschiedlichen elektrischen Leitfähigkeiten aus den Kapazitätssignalen; bei einer Wasser-Öl Emulsionsgrenzschicht Bestimmen einer Position oder eines Perkolationspunkts aus den Induktionssignalen und/oder Bestimmen einer Präsenz und/oder Dicke aus den Kapazitätssignalen; bei einer Wasser-Öl Emulsionsgrenzschicht Positions- und/oder Dickenbestimmung einer wässrigen Phase aus den Induktionssignalen und/oder einer öligen Phase aus den Kapazitätssignalen; Regelung der Dosierung eines Emulsionsinhibitors aufgrund des Messsignals; Bestimmmen einer Präsenz und insbesondere Dicke einer Schaum-Grenzschicht zwischen einer gasförmigen und flüssigen Phase aus den Kapazitätssignalen. Durch die Erfindung sind besonders Emulsions- und Schaum-Grenzschichten erstmals mit grosser Genauigkeit und hoher Ortsauflösung durch rein elektrische Messverfahren detektierbar und charakterisierbar.

In einem weiteren Aspekt hat die Erfindung eine Vorrichtung zur Füllstandsmessung gemäß Anspruch 6 zum Gegenstand, bei der ein Kapazitätssensor eine stabförmige Sonde mit mehreren, entlang einer ersten Sondenachse angeordneten Elektroden umfasst, wobei der Kapazitätssensor und ein Induktionssensor mit mehreren, entlang einer zweiten Sondenachse angeordneten, elektrodenlosen induktiven Sensoren in einem Kombisensor integriert sind. Der Kombisensor zeichnet sich durch eine einfache Bauweise aus und vereinigt die Vorteile des ortsaufgelösten kapazitiven und induktiven Messprinzips.

Ausführungsbeispiele betreffen: eine Messelektronik zur Auswertung der Kapazitäts- und Induktionssignale, zur Generierung eines gemeinsamen Messsignals und zur Bestimmung eines Füllstandsprofils; eine parallele Anordnung der stabförmigen Kapazitäts- und Induktivitätssensoren in einem gemeinsamen Schutzrohr mit Zutrittsöffnungen für das Füllmedium; eine in Richtung der Sondenachsen zu den Kapazitätselektroden versetzte Anordnung der induktiven Sensoren, um eine verbesserte Ortsauflösung im Gesamtmesssignal zu erreichen; Verwendung induktiver Sensoren mit nur einem Ferritkern mit einer Erreger- und zugleich Messspule; Erhöhung der Anzahl Sensorelemente, d. h. von Kapazitätselektroden und/oder induktiven Sensoren, in Bereichen typischer Positionen der zu charakterisierenden Grenzschichten.

Weitere Ausführungen, Vorteile und Anwendungen der Erfindung ergeben sich aus abhängigen Ansprüchen sowie aus der nun folgenden Beschreibung anhand der Figuren.

### KURZE BESCHREIBUNG DER ZEICHNUNG

Es zeigen:
- Fig. 1a: einen Ölseparatortank mit einem erfindungsgemässen Kapazitäts/Induktivitäts-Kombisensor;
- Fig. 1b: typische Füllstandsschichten in einem Ölseparatortank;
- Fig. 2: einen induktiven Sensor mit einem einzigen Ferritkern zur lokalen Füllstandsmessung;
- Fig. 3: einen stabförmigen Kapazitätssensor im Bereich einer Wasser-Öl-Emulsionsgrenzschicht;
- Fig. 4: Messkurven mit einem induktiven Sensor und einem Kapazitätssensor zur Charakterisierung einer Wasser-Öl-Emulsionsgrenzschicht; und
- Fig. 5: ein erfindungsgemässer Aufbau eines Kapazitäts/ Induktivitäts-Kombisensors.

In den Figuren sind gleiche Teile mit gleichen Bezugszeichen versehen.

### WEGE ZUR AUSFÜHRUNG DER ERFINDUNG

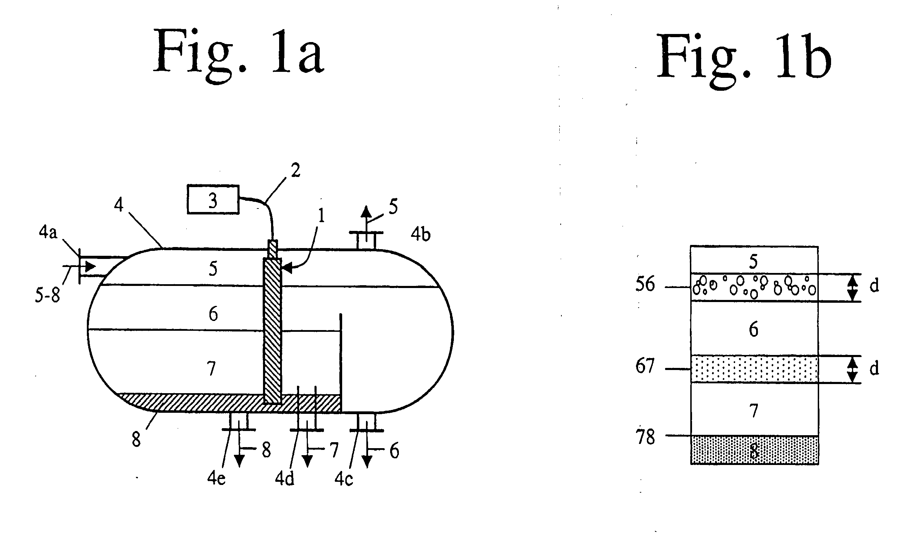

Fig. 1a zeigt schematisch einen erfindungsgemässen Kombisensor 1, der einen an sich aus der WO 98/33044 bekannten stabförmigen Kapazitätssensor 1a und einen Induktionssensor 1b sowie eine über eine Leitung 2 verbundene Messelektronik 3 umfasst und der erfindungsgemäss zur Messung von Füllständen oder eines Füllstandsprofils 5-8, 56, 67, 78 in einem Ölseparatortank 4 ausgestaltet ist. Insbesondere umfasst die Messelektronik 3 Mittel zur Kapazitätsmessung zwischen Paaren von vorzugsweise nächst benachbarten Elektroden 14 und gegebenenfalls weiteren (nicht dargestellten) Gegenelektroden. Der Tank 4 hat einen Einlass 4a für Ölfördergut 5-8 sowie separate Auslasse 4b für Gas 5, 4c für Öl 6, 4d für Wasser 7 und 4e für Feststoffe und Sand 8. 4f bezeichnet eine Ölscheidewand. Fig. 1b zeigt typische Phasen im Tank 4, insbesondere die Grenzschichten mit Schaum 56 und mit Wasser-Öl Emulsion 67. Mit dem erfindungsgemäss kombinierten kapazitiven und induktiven Messverfahren können insbesondere eine Präsenz, Position und Dicke einer Öl-Gas-Schaumgrenzschicht 56 und/oder einer Wasser-Öl Emulsionsgrenzschicht 67 mit grosser Genauigkeit bestimmt werden und gegebenenfalls die Zugabe eines Emulsionsinhibitors geregelt werden.

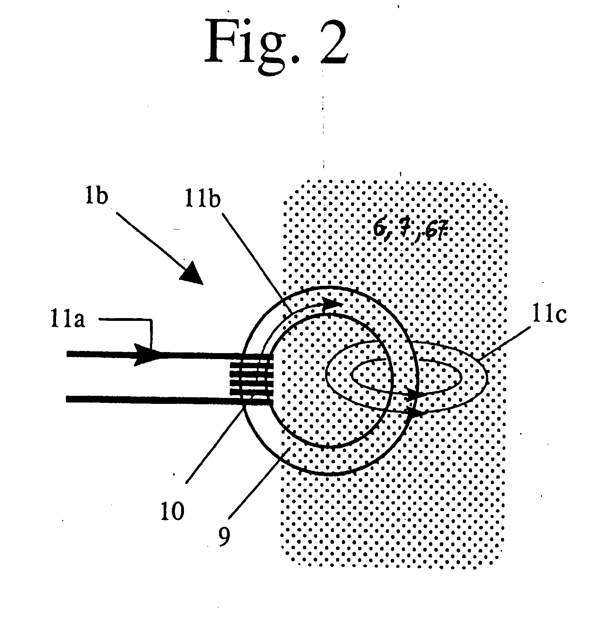

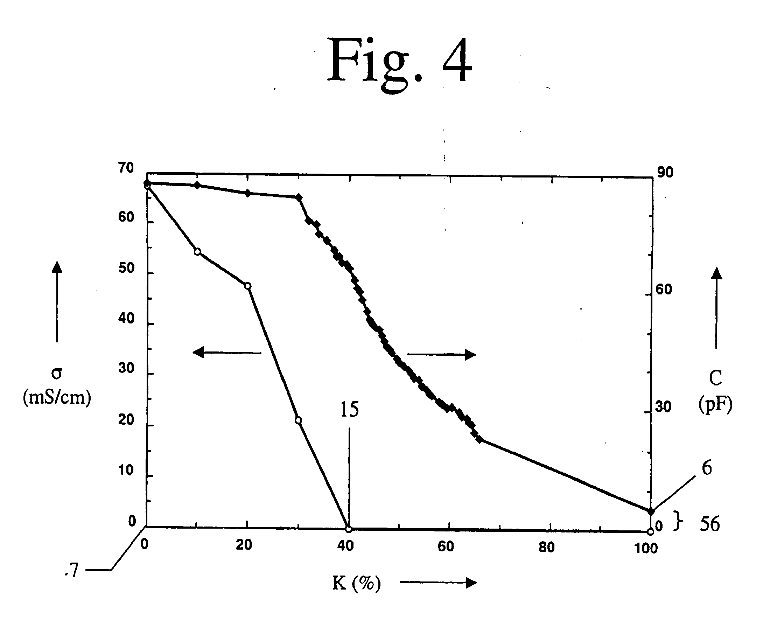

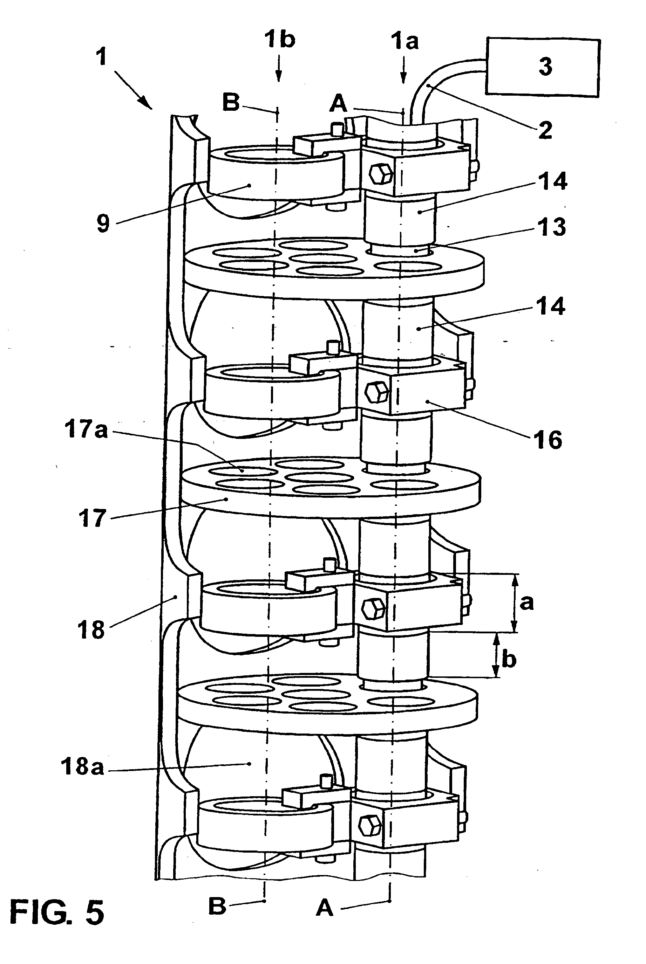

Fig. 2 zeigt einen einzelnen induktiven Sensor 1b mit einem Ferritkern 9 und einer Spule 10. Ein Wechselstrom 11a in der Spule 10 erzeugt einen magnetischen Fluss 11b im Ferritkern 9, der wiederum einen Strom 11c im Füllmedium 6, 7, 67 induziert. In Abhängigkeit von der elektrischen Leitfähigkeit und insbesondere Ionenleitfähigkeit des Füllmediums 6, 7, 67 wirkt das Füllmedium 6, 7, 67 als Sekundärwicklung, so dass das induktive Sensorelement 9, 10 einen offenen oder geschlossenen Transformator darstellt. Der im Füllmedium 6, 7, 67 induzierte Strom 11c ist als elektrischer Verlust in der Erregerspule 10 detektierbar, die dadurch zugleich als Messspule 10 dient. Der induzierte Strom 11c ist wiederum charakteristisch für die Art des Füllmediums 6, 7, 67. Durch eine stabförmige Anordnung mehrerer induktiver Sensoren 9, 10 in einem Induktionssensor 1b (Fig. 5) kann daher ein an Orten der induktiven Sensoren 9, 10 punktweise angenähertes Füllstandsprofil der Medien 6, 7, 67 bestimmt werden. Die Funktionsweise des stabförmiges Kapazitätssensors 1a ist bereits aus der WO 98/33044 bekannt und erlaubt ebenfalls eine abschnittsweise Bestimmung eines Füllstandsprofils. Füllstände 5-8, 56, 67, 78 im Bereich von Elektrodenzwischenräumen, d. h. im Bereich der Elektrodenabstände a (Fig. 5), sind jedoch bei geringen Emulsionsschichtdicken praktisch nicht detektierbar (WO 98/33044, Fig. 1 und 4).

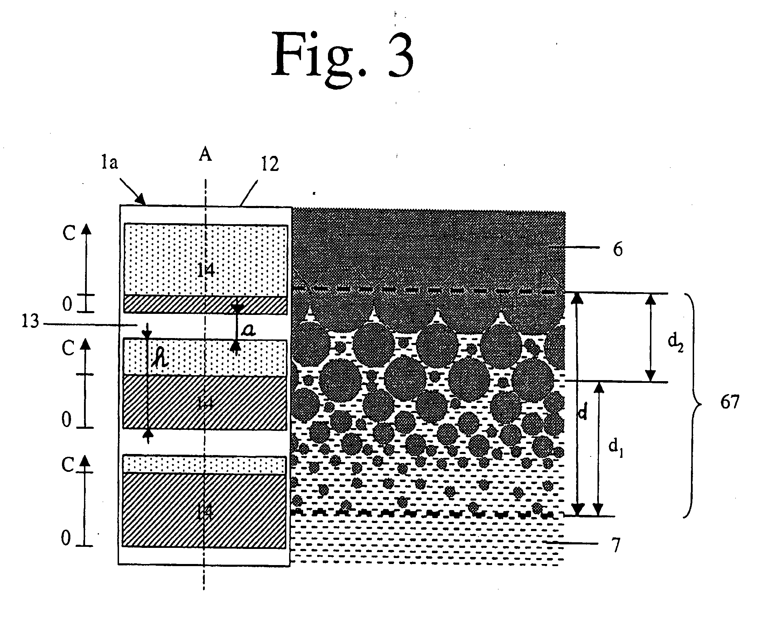

Fig. 3 zeigt den Fall, dass die Dicke d einer Wasser-Öl Emulsionsgrenzschicht 67 grösser als eine Elektrodenhöhe h und ein Elektrodenabstand a an der stabförmigen Sonde 12 des Kapazitätssensors 1a ist. In diesem Fall kann aus den Grössen der Kapazitätssignale C (durch Schraffuren an den Elektroden 14 angedeutet) zwischen mehreren benachbarten Elektroden 14 die Dicke d der Emulsion 67 bestimmt werden. Eine genaue Lokaliserung der Position oder eines Perkolationspunkts der Emulsion 67 ist hingegen nicht möglich.

Fig. 4 zeigt, wie mit Hilfe des erfindungsgemässen Kapazitäts/Induktivitäts-Kombisensors 1 eine noch genauere Charakterisierung der Emulsion 67 erreicht wird. An den Achsen sind unten eine Konzentration K von Öl 6 in Prozent eines Wasser-Öl Gemisches 67, links eine elektrische Leitfähigkeit σ in Millisiemens pro cm (mS/cm) und rechts eine Kapazität C in Pikofarad (pF) aufgetragen. Aus den Induktionssignalen ist der Perkolationspunkt 15, an dem ein Übergang zwischen einer wässrigen Phase (Öltröpfchen in Wasser) und einer öligen Phase (Wassertröpfchen in Öl) stattfindet, exakt bestimmbar, da dort das Induktionssignal verschwindet. Man kann aus dem Induktionssignal auch eine Dicke d₁ und/oder eine (mittlere) Position der wässrigen Emulsionsphase z. B. mit Hilfe vorheriger Eichmessungen bestimmen. Andererseits ist das Kapazitätssignal C in der wässrigen Phase relativ konstant und fällt erst in der öligen Phase ab. Aus dem Abfall ist eine Dicke d₂ und/oder eine (mittlere) Position der öligen Emulsionsphase z. B. mit Hilfe vorheriger Eichmessungen bestimmbar. In Fig. 4 ist ebenfalls dargestellt die Änderung der Kapazitätssignale C beim Übergang von Öl 6 zu Gas 5. Ganz analog wie oben geschildert kann wiederum eine (mittlere) Position und/oder eine Dicke der Öl-Gas-Schaumgrenzschicht aus dem Abfall des Kapazitätssignals C bestimmt werden.

Fig. 5 zeigt einen bevorzugten Aufbau des Kombisensors 1. Die Sondenachsen A des Kapazitätssensors 1a und B des Induktionssensors 1b sind parallel zueinander ausgerichtet und in einem gemeinsamen Schutzrohr 18, z. B. einem PVDF-Rohr 18, mit Abstandshaltern 17 montiert. Das Schutzrohr 18 weist Öffnungen 18a und vorzugsweise die Abstandshalter 17 Öffnungen 17a für einen Zutritt fluider Medien 5, 56, 6, 67, 7 zum Kapazitätssensor 1a und zum Induktionssensor 1b auf. Die induktiven Sensoren 9, 10 des Induktionssensors 1b sind in Richtung der Sondenachsen A, B versetzt zu den Elektroden 14 des Kapazitätssensors 1a angeordnet. Dadurch sind die induktiven Sensoren 9, 10 genau in den Zonen a geringer Messempfindlichkeit des Kapazitätssensors 1a positioniert. Durch die solcherart versetzte Anordnung der Sensorelemente 9, 10; 14 und durch die Tatsache, dass die induktiven Sensoren 9, 10 eine stark lokale Messempfindlichkeit und die Kapazitätselektroden 14 eine eher weiträumige Messempfindlichkeit besitzen, wird ein aussagekräftiges gemeinsames Messsignal mit einer sehr hohen örtlichen Messgenauigkeit oder Ortsauflösung gewonnen. In einer vorteilhaften Bauweise sind die Halterungen 16 für die Ferritkerne 9 an einem Isolationsrohr 13 des Kapazitätssensors 1a in Zwischenräumen a zwischen den Elektroden 14 befestigt. Ein weitere Massnahme zur Verbesserung der Messgenauigkeit besteht darin, eine Anzahl Elektroden 14 des Kapazitätssensors 1a in Bereichen typischer Positionen von Grenzschichten 56, 67, 78, insbesondere von einer Emulsions-Grenzschicht 67 zwischen Öl 6 und Wasser 7 und/oder einer Schaum-Grenzschicht 56 zwischen Gas 5 und Öl 6, zu erhöhen und/oder eine Anzahl induktiver Sensoren 9, 10 des Induktionssensors 1b in einem Bereich typischer Positionen einer Emulsions-Grenzschicht 67 zwischen Öl 6 und Wasser 7 zu erhöhen.

### BEZUGSZEICHENLISTE

- 1: Kapazitäts/Induktions-Kombisensor
- 1a: Kapazitätssensor, stabförmige Kapazitätssonde
- 1b: Induktionssensor
- 2: Messsignalleitung
- 3: Messelektronik
- 4: Behälter, Separatortank
- 4a: Einlass
- 4b-4e: Auslasse
- 4f: Trennwand für Ölauslass
- 5-8: Füllgut
- 5: Gas
- 6: Öl
- 7: Wasser
- 8: Sand
- 56, 67, 78: Grenzschichten, Füllstand
- 56: Schaum
- 67: Emulsion Öl-Wasser
- 9: Ferritkern, Ferritring
- 10: Spule
- 11a: Wechelstrom
- 11b: magnetischer Fluss
- 11c: induzierter Strom
- 12: stabförmige Sonde
- 13: Rohr, GFK-Rohr
- 14: Elektroden, Ringelektroden
- 15: Perkolationspunkt
- 16: Halterung für Ferritringe
- 17: Abstandshalter
- 17a: Öffnungen
- 18: Schutzrohr, PVDF-Rohr
- 18a: Öffnungen
- C: Kapazitätssignal
- K: Ölkonzentration in Emulsion
- σ: Leitfähigkeit

## Patentansprüche

1. Verfahren zur Füllstandsmessung eines Behälters (4), insbesondere geeignet zur Bestimmung eines Füllstandsprofils in einem Separatortank (4) mit Gas (5), Öl (6), Wasser (7) und Sand (8), wobei ein Kapazitätssensor (1a) eine stabförmige Sonde (12) mit mehreren, entlang einer ersten Sondenachse (A) angeordneten Elektroden (14) umfasst und elektrische Kapazitätssignale (C) zwischen den Elektroden (14) gemessen werden, **dadurch gekennzeichnet, dass** a) mittels eines Induktionssensors (1b) mit mehreren, entlang einer zweiten, mit der ersten Sondenachse (A) paralleler Sondenachse (B) angeordneten, elektrodenlosen induktiven Sensoren (9, 10) elektrische Induktionssignale gemessen werden, und b) aus den Kapazitätssignalen (C) und den Induktionssignalen, mittels einer Messelektronik (3), ein gemeinsames Messsignal zur Bestimmung eines Füllstandsprofils (5-8, 56, 67, 78) im Behälter (4) gebildet wird, und dass die Messungen mit den induktiven Sensoren (9, 10) des Induktionssensors (1b) in Richtung der Sondenachsen (A, B) versetzt zu den Elektroden (14) des Kapazitätssensors (1a) angeordnet ausgeführt werden.

2. Verfahren zur Füllstandsmessung nach Anspruch 1, **dadurch gekennzeichnet, dass**
a) aus den Induktionssignalen des Messsignals eine Position einer Grenzschicht (67) zwischen Medien (6, 7) mit unterschiedlichen elektrischen Leitfähigkeiten bestimmt wird und/oder
b) aus den Kapazitätssignalen (C) des Messsignals eine Position einer Grenzschicht (56, 67, 78) und/oder eine Dicke (d) einer Grenzschicht (56, 67) zwischen zwei Medien (5, 6; 6, 7; 7, 8) mit unterschiedlichen Dielektrizitätskonstanten und/oder unterschiedlichen elektrischen Leitfähigkeiten bestimmt wird.

3. Verfahren zur Füllstandsmessung nach einem der Ansprüche 1-2, **dadurch gekennzeichnet, dass**
a) aus den Induktionssignalen eine Position und vorzugsweise ein Perkolationspunkt (15) einer Emulsions-Grenzschicht (67) zwischen Öl (6) und Wasser (7) bestimmt wird und/oder
b) aus den Kapazitätssignalen (C) eine Präsenz und vorzugsweise eine Dicke (d) einer Emulsions-Grenzschicht (67) zwischen Öl (6) und Wasser (7) bestimmt wird.

4. Verfahren zur Füllstandsmessung nach einem der Ansprüche 1-3, **dadurch gekennzeichnet, dass**
a) aus den Induktionssignalen des Messsignals eine Position und/oder Dicke (d₁) einer wässrigen Phase einer Emulsions-Grenzschicht (67) zwischen Öl (6) und Wasser (7) bestimmt wird und/oder
b) aus den Kapazitätssignalen (C) des Messsignals eine Position und/oder Dicke (d₂) einer öligen Phase einer Emulsions-Grenzschicht (67) zwischen Öl (6) und Wasser (7) bestimmt wird und
c) insbesondere dass aufgrund der Kapazitätssignale (C) und/oder der Induktionssignale eine Zugabe eines Emulsionsinhibitors geregelt wird.

5. Verfahren zur Füllstandsmessung nach einem der Ansprüche 1-4, **dadurch gekennzeichnet, dass**
a) aus den Kapazitätssignalen (C) des Messsignals eine Position und/oder Dicke (d) einer Grenzschicht (56) zwischen einem gasförmigen Medium (5) und einem flüssigen Medium (6, 7) bestimmt wird und
b) insbesondere dass aus den Kapazitätssignalen (C) eine Präsenz und vorzugsweise eine Dicke (d) einer Schaum-Grenzschicht (56) zwischen Gas (5) und Öl (6) bestimmt wird.

6. Vorrichtung zur Füllstandsmessung zur Ausführung des Verfahrens nach einem der Ansprüche 1-5, wobei ein Kapazitätssensor (1a) eine stabförmige Sonde (12) mit mehreren, entlang einer ersten Sondenachse (A) angeordneten Elektroden (14) umfasst, **dadurch gekennzeichnet, dass** der Kapazitätssensor (1a) und ein Induktionssensor (1b) mit mehreren, entlang einer zweiten, mit der ersten Sondenachse (A) paralleler Sondenachse (B) angeordneten, elektrodenlosen induktiven Sensoren (9, 10) in einem Kombisensor (1) integriert sind,
wobei der Kombisensor (1) eine Messelektronik (3) zur Auswertung von Kapazitätssignalen (C) des Kapazitätssensors (1a) und von Induktionssignalen der induktiven Sensoren (9, 10), zur Generierung eines gemeinsamen Messsignals aus den Kapazitätssignalen (C) und den Induktionssignalen und zur Bestimmung eines Füllstandsprofils (5-8, 56, 67, 78) in einem Behälter (4) umfasst, und wobei
die induktiven Sensoren (9, 10) des Induktionssensors (1b) in Richtung der Sondenachsen (A, B) versetzt zu den Elektroden (14) des Kapazitätssensors (1a) angeordnet sind.

7. Vorrichtung nach Anspruch 6, **dadurch gekennzeichnet, dass**
a) die erste und die zweite Sondenachse (A, B) parallel zueinander in einem Schutzrohr (18) angeordnet sind und durch Abstandshalter (17) beabstandet sind und
b) das Schutzrohr (18) und insbesondere die Abstandshalter (17) Öffnungen (18a, 17a) für einen Zutritt fluider Medien (5, 56, 6, 67, 7) zum Kapazitätssensor (1a) und zum Induktionssensor (1b) aufweisen.

8. Vorrichtung nach einem der Ansprüche 6-7, **dadurch gekennzeichnet, dass**
insbesondere dass Halterungen (16) für Ferritkerne (9) an einem Isolationsrohr (13) des Kapazitätssensors (1a) in Zwischenräumen zwischen den Elektroden (14) befestigt sind und
insbesondere dass jeder induktive Sensor (9, 10) genau einen Ferritkern (9) mit einer Erregerspule (10) aufweist, die zugleich als Messspule (10) wirksam ist.

9. Vorrichtung nach einem der Ansprüche 6-8, **dadurch gekennzeichnet, dass** zur verbesserten Ortsauflösung der Füllstandsmessung in einem Separatortank (4)
a) eine Anzahl Elektroden (14) des Kapazitätssensors (1a) in Bereichen typischer Positionen von Grenzschichten (56, 67, 78), insbesondere von einer Emulsions-Grenzschicht (67) zwischen Öl (6) und Wasser (7) und/oder einer Schaum-Grenzschicht (56) zwischen Gas (5) und Öl (6), erhöht ist und/oder
b) eine Anzahl induktiver Sensoren (9, 10) des Induktionssensors (1b) in einem Bereich typischer Positionen einer Emulsions-Grenzschicht (67) zwischen Öl (6) und Wasser (7) erhöht ist.

## Claims

1. A method for filling level measurement of a tank (4), especially suited for determining a filling level profile in a separator tank (4) with gas (5), oil (6), water (7) and sand (8), with a capacitance sensor (1a) comprising a rod-shaped probe (12) with a plurality of electrodes (14) arranged along a first probe axis (A) and electric capacitance signals (C) being measured between the electrodes (14), **characterized in that**
a) electric induction signals are measured by an induction sensor (1b) having a plurality of electrodeless inductive sensors (9, 10) arranged along a second probe axis (B), parallel to the first probe axis (A),
b) a joint measuring signal is formed from the capacitance signals (C) and the induction signals by means of measuring electronics (3) to determine a filling level profile (5-8, 56, 67, 78) in the tank (4), and the measurements are performed by the inductive sensors (9, 10) of the induction sensor (1b) arranged offset in the in the direction of the probe axes (A, B) in relation to the electrodes (14) of the capacitance sensor (1a).

2. The method for filling level measurement according to claim 1, **characterized in that**
a) a position of a boundary layer (67) between media (6, 7) with different electrical conductivities is determined from the induction signals of the measuring signal, and/or
b) a position of a boundary layer (56, 67, 78) and/or a thickness (d) of a boundary layer (56, 67) between two media (5, 6; 6, 7; 7, 8) with different dielectric constants and/or different electrical conductivities is determined from the capacitance signals (C) of the measuring signal.

3. The method for filling level measurement according to claim 1 or 2, **characterized in that**
a) a position and preferably a percolation point (15) of an emulsion boundary layer (67) between oil (6) and water (7) is determined from the induction signals, and/or
b) a presence and preferably a thickness (d) of an emulsion boundary layer (67) between oil (6) and water (7) is determined from the capacitance signals (C).

4. The method for filling level measurement according to any of claims 1-3, **characterized in that**
a) a position and/or thickness (d₁) of an aqueous phase of an emulsion boundary layer (67) between oil (6) and water (7) is determined from the induction signals of the measuring signal and/or
b) a position and/or thickness (d₂) of an oily phase of an emulsion boundary layer (67) between oil (6) and water (7) is determined from the capacitance signals (C) of the measuring signal, and
c) in particular an addition of an emulsion inhibitor is controlled on the basis of the capacitance signals (C) and/or the induction signals.

5. The method for filling level measurement according to any of claims 1-4, **characterized in that**
a) a position and/or thickness (d) of a boundary layer (56) between a gaseous medium (5) and a liquid medium (6, 7) is determined from the capacitance signals (C) of the measuring signal, and
b) in particular a presence and preferably a thickness (d) of a foam boundary layer (56) between gas (5) and oil (6) is determined from the capacitance signals (C).

6. A device for filling level measurement to carry out the method according to any of claims 1-5, with a capacitance sensor (1a) comprising a rod-shaped probe (12) with a plurality of electrodes (14) arranged along a first probe axis (A), **characterized in that** the capacitance sensor (1a) and an induction sensor (1b) having a plurality of electrodeless inductive sensors (9, 10) arranged along a second probe axis (B) are integrated in a combined sensor (1), wherein the combined sensor (1) comprises measuring electronics (3) for evaluating capacitance signals (C) of the capacitance sensor (1a) and induction signals of the inductive sensors (9, 10), for generating a joint measuring signal from the capacitance signals (C) and the induction signals and for determining a filling level profile (5-8, 56, 67, 78) in a tank (4), and wherein the inductive sensors (9, 10) of the induction sensor (1b) are offset in the direction of the probe axes (A, B) in relation to the electrodes (14) of the capacitance sensor (1a).

7. The device according to claim 6, **characterized in that**
a) the first and second probe axes (A, B) are arranged parallel to each other in a protective tube (18) and are spaced apart by spacers (17), and
b) the protective tube (18) and, in particular, the spacers (17) have openings (18a, 17a) for access of fluid media (5, 56, 6, 67, 7) to the capacitance sensor (1a) and to the induction sensor (1b).

8. The device according to claim 6 or 7, **characterized in that**
in particular holders (16) for ferrite cores (9) are fastened on an isolation tube (13) of the capacitance sensor (1a) in interspaces between the electrodes (14), and
in particular each inductive sensor (9, 10) has precisely one ferrite core (9) with an exciting coil (10), which is effective at the same time as a measuring coil (10).

9. The device according to any of claims 6-8, **characterized in that**, for improved locational resolution of the filling level measurement in a separator tank (4),
a) the number of electrodes (14) of the capacitance sensor (1a) is increased in regions of typical positions of boundary layers (56, 67, 78), in particular of an emulsion boundary layer (67) between oil (6) and water (7) and/or a foam boundary layer (56) between gas (5) and oil (6), and/or
b) the number of inductive sensors (9, 10) of the induction sensor (1b) is increased in a region of typical positions of an emulsion boundary layer (67) between oil (6) and water (7).

## Revendications

1. Procédé de mesure du niveau de remplissage d'un récipient (4), convenant notamment pour déterminer un profil de niveau de remplissage dans un bac séparateur (4) avec du gaz (5), de l'huile (6), de l'eau (7) et du sable (8), un capteur de capacité (1a) comprenant une sonde (12) en forme de tige munie de plusieurs électrodes (14) disposées le long d'un premier axe de sonde (A) et des signaux de capacité électriques (C) entre les électrodes (14) étant mesurés, **caractérisé en ce que**
a) des signaux d'induction électriques sont mesurés avec un capteur d'induction (1b) ayant plusieurs capteurs inductifs (9, 10) sans électrode disposés le long d'un deuxième axe de sonde (B), parallèle au premier axe de sonde (A), et
b) un signal de mesure commun est formé à partir des signaux de capacité (C) et des signaux d'induction au moyen d'une électronique de mesure (3) en vue de déterminer un profil de niveau de remplissage (5-8, 56, 67, 78) dans le récipient (4), et **en ce que** les mesures sont réalisées avec les capteurs inductifs (9, 10) du capteur d'induction (1b) dans la direction des axes de sonde (A, B), qui sont disposés décalés par rapport aux électrodes (14) du capteur de capacité (1a).

2. Procédé de mesure du niveau de remplissage selon la revendication 1, **caractérisé en ce que**
a) une position d'une couche intermédiaire (67) entre des fluides (6, 7) ayant des conductivités électriques différentes est définie à partir des signaux d'induction du signal de mesure, et/ou
b) une position d'une couche limite (56, 67, 78) et/ou une épaisseur (d) d'une couche limite (56, 67) entre deux fluides (5, 6 ; 6, 7 ; 7, 8) ayant des constantes diélectriques différentes et/ou des conductivités électriques différentes est définie à partir des signaux de capacité (C) du signal de mesure.

3. Procédé de mesure du niveau de remplissage selon l'une des revendications 1 à 2, **caractérisé en ce que**
a) une position et de préférence un point de percolation (15) d'une couche limite d'émulsion (67) entre l'huile (6) et l'eau (7) est définie à partir des signaux d'induction, et/ou
b) une présence et de préférence une épaisseur (d) d'une couche limite d'émulsion (67) entre l'huile (6) et l'eau (7) est définie à partir des signaux de capacité (C).

4. Procédé de mesure du niveau de remplissage selon l'une des revendications 1 à 3, **caractérisé en ce que**
a) une position et/ou une épaisseur (d1) d'une phase aqueuse d'une couche limite d'émulsion (67) entre l'huile (6) et l'eau (7) est définie à partir des signaux d'induction du signal de mesure, et/ou
b) une position et/ou une épaisseur (d2) d'une phase huileuse d'une couche limite d'émulsion (67) entre l'huile (6) et l'eau (7) est définie à partir des signaux de capacité (C) du signal de mesure, et
c) notamment **en ce qu'**un apport d'un inhibiteur d'émulsion est régulé en se basant sur les signaux de capacité (C) et/ou les signaux d'induction.

5. Procédé de mesure du niveau de remplissage selon l'une des revendications 1 à 4, **caractérisé en ce que**
a) une position et/ou une épaisseur (d) d'une couche limite (56) entre un fluide gazeux (5) et un fluide liquide (6, 7) est définie à partir des signaux de capacité (C) du signal de mesure, et
b) notamment **en ce qu'**une présence et de préférence une épaisseur (d) d'une couche limite de mousse (56) entre le gaz (5) et l'huile (6) est définie à partir des signaux de capacité (C).

6. Dispositif de mesure du niveau de remplissage pour mettre en oeuvre le procédé selon l'une des revendications 1 à 5, un capteur de capacité (1a) comprenant une sonde (12) en forme de tige munie de plusieurs électrodes (14) disposées le long d'un premier axe de sonde (A), **caractérisé en ce que** le capteur de capacité (1a) et un capteur d'induction (1b) sont intégrés dans un capteur combiné (1) avec plusieurs capteurs inductifs (9, 10) sans électrode disposés le long d'un deuxième axe de sonde (B), parallèle au premier axe de sonde (A),
le capteur combiné (1) comprenant une électronique de mesure (3) pour interpréter des signaux de capacité (C) du capteur de capacité (1a) et des signaux d'induction des capteurs inductifs (9, 10) en vue de générer un signal de mesure commun à partir des signaux de capacité (C) et des signaux d'induction et en vue de déterminer un profil de niveau de remplissage (5-8, 56, 67, 78) dans un récipient (4), et
les capteurs inductifs (9, 10) du capteur d'induction (1b) dans la direction des axes de sonde (A, B) étant disposés décalés par rapport aux électrodes (14) du capteur de capacité (1a).

7. Dispositif selon la revendication 6, **caractérisé en ce que**
a) le premier et le deuxième axe de sonde (A, B) sont disposés parallèlement l'un à l'autre dans un tube de protection (18) et sont espacés par des entretoises (17), et
b) le tube de protection (18) et notamment les entretoises (17) présentent des ouvertures (18a, 17a) pour un accès de milieux fluides (5, 56, 6, 67, 7) au capteur de capacité (1a) et au capteur d'induction (1b).

8. Dispositif selon l'une des revendications 6 à 7, **caractérisé en ce que**
notamment des attaches (16) pour des noyaux en ferrite (9) sont fixées à une tube d'isolation (13) du capteur de capacité (1a) dans des espaces intermédiaires entre les électrodes (14), et
notamment **en ce que** chaque capteur inductif (9, 10) présente exactement un noyau en ferrite (9) muni d'une bobine excitatrice (10) qui fait en même temps office de bobine de mesure (10).

9. Dispositif selon l'une des revendications 6 à 8, **caractérisé en ce que** pour une résolution améliorée de la position de la mesure du niveau de remplissage dans un bac séparateur (4),
a) un nombre d'électrodes (14) du capteur de capacité (1a) est augmenté dans des zones de positions types de couches limites (56, 67, 78), notamment d'une couche limite d'émulsion (67) entre l'huile (6) et l'eau (7) et/ou d'une couche limite de mousse (56) entre le gaz (5) et l'huile (6), et/ou
b) un nombre de capteurs inductifs (9, 10) du capteur d'induction (1b) est augmenté dans une zone de positions types d'une couche limite d'émulsion (67) entre l'huile (6) et l'eau (7).
